# EUROPEAN PATENT APPLICATION

(11) **EP 4 456 283 A1**
(43) Date of publication of application: **30.10.2024**
(21) Application number: 22952515.9
(22) Date of filing: 29.07.2022
(51) Int. Cl.: H01M 50/202, H01M 50/242, H01M 50/209

(54) **BOX BODY OF BATTERY, AND BATTERY AND ELECTRIC DEVICE**

(71) Applicant: Contemporary Amperex Technology (Hong Kong) Limited, Central, Central And Western District (HK)
(72) Inventor: YAO, Pengcheng, Ningde, Fujian 352100 (CN); XUE, Danyue, Ningde, Fujian 352100 (CN); WANG, Peng, Ningde, Fujian 352100 (CN); CHEN, Xingdi, Ningde, Fujian 352100 (CN)
(74) Representative: Holt, Lucy Rose
(86) International application number: PCT/CN2022/109112
(87) International publication number: WO 2024/021068

(57) **Abstract**

Provided in the embodiments of the present application are a box body of a battery, and the battery and an electric device. The box body comprises: a frame beam and a cross beam. The frame beam comprises a first surface and an engagement slot having an opening located in the first surface. The cross beam comprises, in the lengthwise direction thereof, a main body portion and end portions located at two ends of the main body portion, wherein each end portion comprises a protruding structure and a connection face located on a peripheral side of the protruding structure; and the cross beam and the frame beam are in engagement fit with the engagement slot by means of the protruding structures and are fixedly connected to the first surface by means of the connection faces. In the embodiments of the present application, the protruding structures of the end portions of the cross beam are engaged with the engagement slot, so that a force borne by the cross beam can be transmitted to the interior of the frame beam by means of the protruding structures, thereby increasing the area under stress between the frame beam and the cross beam, and further improving the strength of the box body of the battery.

## Description

### TECHNICAL FIELD

The present application relates to the field of battery technology, and more particularly, to a housing of a battery, a battery and a power consumption device.

### BACKGROUND

Battery cells are widely used in electronic devices, such as mobile phones, notebook computers, electromobiles, electric vehicles, electric airplanes, electric ships, electric toy cars, electric toy ships, electric toy airplanes, and electric tools.

With the development of electronic devices, great demands are made on the safety performance of the battery integrated by the battery cells and the impact resistance performance of the electronic device, improving the strength of the housing of the battery on the premise of easy mounting and low cost is an urgent problem to be solved in the battery technology.

### SUMMARY

The present application provides a housing of a battery, a battery and a power consumption device, which can improve the overall strength of the housing of the battery.

In a first aspect, an embodiment of the present application provides a housing of a battery, including a frame beam and a cross beam, the frame beam including a first surface and an engaging groove with an opening on the first surface. The cross beam includes a main body and end portions located at two ends of the main body in a length direction of the cross beam, the end portion including a protruding structure and a connecting surface located on a peripheral side of the protruding structure, the cross beam being engaged with the frame beam through the protruding structure and the engaging groove, and the cross beam being fixedly connected with the frame beam through the first surface and the connecting surface.

In the above-mentioned technical solution, the engaging groove is provided in the frame beam and the cross beam is embedding in the engaging groove, so the connection strength between the frame beam and cross beam is improved, reducing the possibility of being destroyed by the expansion force of the battery cell, which improves the safety of the housing of the battery. In the technical solution, the protruding structure at the end of the cross beam is engaged into the engaging groove, so the force on the cross beam is allowed to be transmitted into the frame beam through the protruding structure, increasing the force receiving area between the frame beam and the cross beam, which further improves the strength of the housing of the battery.

In some embodiments, a minimum distance H between a bottom edge of the opening and a bottom edge of the first surface, in a thickness direction of the housing, satisfies a relationship of 10 mm≤H≤ 100 mm..

In the above-mentioned technical solution, if the minimum distance between the bottom edge of the opening and the bottom edge of the first surface is too small or too large, the closer the opening is to the edge of the frame beam and the lower the strength of the frame beam itself is. In the above-mentioned technical solution, the minimum distance between the bottom edge of the opening and the bottom edge of the first surface is limited to a relationship of 10 mm≤H≤100 mm, which ensures the strength of the frame beam itself.

In some embodiments, the engaging groove includes a plurality of side wall surfaces, and the protruding structure is provided in tight contact with a part of the plurality of side wall surfaces.

In the above-mentioned technical solution, the protruding structure is in tight contact with a part of the side wall surfaces to realize the engagement between the protruding structure and the engaging groove, which facilitates the subsequent fixed connection between the cross beam and the frame beam.

In some embodiments, the engaging groove includes a plurality of side wall surfaces, and a gap is provided between the protruding structure and another part of the plurality of side wall surfaces.

In the above-mentioned technical solution, a gap is provided between a part of the side wall surfaces of the engaging groove and the protruding structure, so as to ensure that the protruding structure can be more easily embedded in the engaging groove.

In some embodiments, a minimum thickness H1 of the protruding structure in a thickness direction of the cross beam satisfies a relationship of 5 mm≤H1≤100 mm.

In the above-mentioned technical solution, if the thickness of the protruding structure is too small, the force receiving performance between the protruding structure and the frame beam will be reduced. If the thickness of the protruding structure is too large, the connection strength between the protruding structure and the cross beam will be reduced. In the above-mentioned technical solution, the thickness of the protruding structure is limited to a relationship of 5mm≤H1≤100mm, so as to ensure the force receiving performance between the protruding structure and the frame beam and the connection strength between the protruding structure and the cross beam.

In some embodiments, a minimum distance between the two side wall surfaces of the engaging groove opposite to each other in an extending direction of the frame beam is H2, and H1 and H2 satisfy a relationship of 0 mm≤H2-H1≤1 mm.

In the above-mentioned technical solution, the minimum distance between the two side wall surfaces of the engaging groove opposite to each other in the extending direction of the frame beam is disposed so that the two side wall surfaces and the two surfaces of the protruding structure in the thickness direction may be in tight contact with each other or arranged with a gap therebetween, which ensures that the protruding structure can be easily engaged with the engaging groove. If the gap left is too large, the welding strength between the cross beam and the frame beam will be reduced. In the above-mentioned technical solution, a relationship between the minimum distance between the two side wall surfaces of the engaging groove opposite to each other in the extending direction of the frame beam and the two surfaces of the protruding structure in the thickness direction is limited to 0 mm≤H2-H1≤1 mm, so as to facilitate the assembly of the protruding structure and ensure the welding strength between the cross beam and the frame beam.

In some embodiments, a depth H3 of the engaging groove in a thickness direction of the frame beam satisfies a relationship of 5 mm≤H3≤50 mm.

In the above-mentioned technical solution, the deeper the depth of the engaging groove, the lower the strength of the frame beam itself is, and the shallower the depth of the engaging groove, the worse the force effect which the protruding structure can transmit to the engaging groove is. In the above-mentioned technical solution, the depth of the engaging groove is limited to a relationship of 5 mm≤H3≤50 mm, and the depth of the engaging groove is increased as much as possible while ensuring the strength of the frame beam itself.

In some embodiments, a distance between an end surface of the protruding structure in a protruding direction and the connecting surface is H4, and H3 and H4 satisfy a relationship of 0 mm≤H4-H3≤10 mm.

In the above-mentioned technical solution, the more similar the distance between an end surface of the protruding structure in the protruding direction and the connecting surface is to the depth of the engaging groove in the thickness direction of the frame beam, the more difficult the process is. The greater the difference between the distance between the end surface of the protruding structure in the protruding direction and the connecting surface, and, the depth of the engaging groove in the thickness direction of the frame beam, the worse the force receiving performance between the protruding structure and the frame beam. In the above-mentioned technical solution, a relationship between the protruding distance of the protruding structure and the depth of the engaging groove is limited to 0mm<H4-H3≤10mm, so as to balance the process and force receiving performance.

In some embodiments, the connecting surface is connected with the first surface by welding.

In the above-mentioned technical solution, the frame beam is fixedly connected with the cross beam by welding so as to improve the connection strength between the frame beam and the cross beam.

In some embodiments, the housing further includes a support plate connected with the frame beam and enclosing with the frame beam to form an accommodating cavity.

In the above-mentioned technical solution, the battery cell may be accommodated in the accommodating cavity.

In some embodiments, the frame beam comprises a position restricting portion provided on a side of the opening away from the support plate and/or on a side of the opening close to the support plate, and the connecting surface abuts against the position restricting portion.

In above-mentioned technical solution, the position restricting portion limits the depth of the protruding structure embedded in the engaging groove, avoiding that the depth of the protruding structure, on a side of the cross beam, embedded in the engaging groove is too deep due to the problem such as process error or process defect, and the depth of the protruding structure, on the other side of the cross beam, embedded in the engaging groove is too shallow.

In some embodiments, the frame beam further comprises a guide transition portion provided on a side of the frame beam close to the support plate and provided to protrude in a direction from the first surface toward the accommodating cavity, the guide transition portion is provided with a guide surface on its side facing away from the frame beam, and the cross beam abuts against at least a portion of the guide surface.

In the above-mentioned technical solution, the guide transition portion can enable the connection between the cross beam and the frame beam to be easy and simple, reducing the accuracy calibrating time required for the connection between the cross beam and the frame beam.

In some embodiments, the frame beam comprises two first side beams and two second side beams, the two first side beams are arranged in a first direction, and the two second side beams are arranged in a second direction, and the first direction intersects with the second direction; each second side beam is connected with the two first side beams, the first side beams and the second side beams form an accommodating space in which the cross beam is arranged; and two cross beams are provided, the two cross beams are arranged to be spaced apart in the second direction, and each cross beam is connected with the two first side beams respectively.

In the above-mentioned technical solution, the first side beam and the second side beam together form a frame, and the cross beam and the first side beam form an accommodating space for accommodating the battery cell.

In some embodiments, the first side beam comprises a beam main body and a reinforcement portion which protrudes from the first surface, and at least one reinforcement portion is provided between two adjacent engaging grooves on the beam main body in an extending direction of the first side beam.

In above-mentioned technical solution, the reinforcement portion is configured to improve the strength of beam body, and the reinforcement portion is provided between adjacent two engaging grooves so as to be able to reduce the influence on the strength of the beam body itself after the engaging groove is provided on the beam body.

In a second aspect, an embodiment of the present application provides a battery, including a battery cell and a plurality of housing according to any one of the embodiments of the first aspect for accommodating the battery cell.

In a third aspect, an embodiment of the present application provides a power consumption device, including the battery of any one of the embodiments of the second aspect for providing electrical energy.

### BRIEF DESCRIPTION OF THE DRAWINGS

In order to more clearly describe the technical solutions of the embodiments of the present application, drawings that need to be used in the embodiments of the present application will be briefly introduced as below, and it is obvious for those skilled in the art that the drawings described below are only some embodiments of the present application and other drawings can be obtained based on the drawings without creative work.
Fig. 1 is a structural schematic diagram of a vehicle provided by some embodiments of the present application;
Fig. 2 is a exploded schematic diagram of a battery provided by some embodiments of the present application;
Fig. 3 is a structural schematic diagram of a housing of the battery provided by some embodiments of the present application;
Fig. 4 is a structural enlarged diagram of a region Q shown in Fig. 3;
Fig. 5 is another perspective schematic diagram of the housing of the battery shown in Fig. 3;
Fig. 6 is a cross-sectional structural schematic diagram along line A-A in Fig. 5;

In the drawings, the drawings are not drawn to actual scale.

### Reference numbers:

1000, vehicle; 2000, battery; 2010, housing; 2020, battery cell; 3000, controller; 4000, motor;
100, frame beam; 110, first surface; 110a, bottom edge; 120, engaging groove; 121, opening; 121a, bottom; 122, side wall surface; 122a, bottom surface; 122b, top surface; 130, position restricting portion; 140, guide transition portion; 140a, guide surface; 150, first side beam; 151, beam body; 152, reinforcement portion; 160, second side beam;
200, cross beam; 210, main body; 220, end portion; 221, protruding structure; 222, connecting surface;
300, support plate;
X, a thickness direction of the cross beam, an extending direction of the frame beam and a second direction; Y, a thickness direction of the frame beam, a protruding direction and a first direction.

### DETAILED DESCRIPTION

In order to make the objects, technical solutions and advantages of the embodiments of the present application clearer, the technical solutions in the embodiments of the present application will be clearly described below in conjunction with the accompanying drawings the embodiments in the present application, and obviously, the described embodiments are some of, rather than all of, the embodiments of the present application. All the other embodiments obtained by a person of ordinary skill in the art based on the embodiments in the present application without involving any creative effort shall fall within the scope of protection of the present application.

Unless otherwise defined, all technical and scientific terms used in the present application have the same meanings as those commonly understood by those skilled in the art to which the present application belongs; the terms used in the specification of the present application are merely for the purpose of describing specific embodiments, but are not intended to limit the present application; the terms "including" and "having" as well as any variations thereof in the description, claims and the above description of the drawings of the present application are intended to cover the non-exclusive inclusion. The terms "first", "second" and the like in the specification and the claims of the present application as well as the above drawings are configured to distinguish different objects, rather than to describe a specific order or primary-secondary relationship.

Reference in the present application to "embodiment" means that a particular feature, structure, or characteristic described in conjunction with the embodiment can be included in at least one embodiment of the present application. The occurrences of the word in various places in the specification are neither necessarily all referring to the same embodiment, nor are separate or alternative embodiments mutually exclusive of other embodiments.

In the description of the present application, it should be noted that unless otherwise explicitly specified and defined, the terms "mounting", "connecting", "connection" and "attaching" should be understood in a broad sense, for example, they may be a fixed connection, a detachable connection, or an integrated connection; may be a direct connection and may also be an indirect connection via an intermediate medium, or may be communication between the interiors of two elements. A person of ordinary skill in the art may understand the specific meanings of the foregoing terms in the present application according to specific circumstances.

In the present application, the term "and/or" is merely an association relation describing associated objects, which means that there may be three relations, for example, A and/or B may represent three situations: A exists alone, both A and B exist, and B exists alone. In addition, the character "/" in the present application generally indicates that the associated objects before and after the character are in an "or" relation.

In the embodiments of the present application, the same reference numbers represent the same components, and for the sake of brevity, in different embodiments, detailed description of the same components is omitted. It should be understood that the thickness, length, width and other dimensions of the various components in the embodiments of the present application shown in the drawings, as well as the overall thickness, length, width and other dimensions of the integrated device, are for illustrative purposes only and should not constitute any limitation to the present application.

The word "plurality of" appearing in the present application refers to two or more (two is included).

In the present application, a battery cell may include a lithium ion secondary battery cell, a lithium ion primary battery cell, a lithium sulfur battery cell, a sodium lithium ion battery cell, a sodium ion battery cell or a magnesium ion battery cell, etc., which are not limited by the embodiments of the present application. The battery cell may be in cylinder, flat, cuboid or other shapes, which are not limited by the embodiments of the present application.

The battery cell includes an electrode assembly and an electrolyte, and the electrode assembly includes a positive electrode plate, a negative electrode plate and a separator. The battery cell operates mainly depending on movement of metal ions between the positive electrode plate and the negative electrode plate. The positive electrode plate includes a positive electrode current collector and a positive electrode active material layer coated on a surface of the positive electrode current collector; the positive electrode current collector includes a positive electrode coating area and a positive electrode tab connected with the positive electrode coating area, the positive electrode coating area is coated with a positive electrode active material layer, and the positive electrode tab is not coated with a positive electrode active material layer. Taking a lithium ion battery cell as an example, the positive electrode current collector may be made of aluminum, and the positive active material layer includes a positive active material which may be lithium cobaltate, lithium iron phosphate, ternary lithium or lithium manganate, lithium iron phosphate, ternary lithium or lithium manganate. The negative electrode plate includes a negative electrode current collector and a negative electrode active material layer coated on a surface of the negative electrode current collector; the negative electrode current collector includes a negative electrode coating area and a negative electrode tab connected with the negative electrode coating area, the negative electrode coating area is coated with a negative electrode active material layer, and the negative electrode tab is not coated with a negative electrode active material layer. The negative electrode current collector may be made of copper, and the negative electrode active material layer includes a negative electrode active material which may be carbon or silicon. The separator may be made of polypropylene (PP) or polyethylene (PE).

The battery cell also includes a casing, and an accommodating cavity for accommodating the electrode assembly is formed inside the casing. The casing can protect the electrode assembly from the outside, so as to prevent external foreign matter from affecting the charging or discharging of the electrode assembly.

The battery cell is accommodated in the housing to form a battery pack, and the electric power of the battery cell is transmitted to an external electrical appliance through a circuit. The housing includes a frame composed of plurality of beams, and in some cases, side beams of the housing and internal cross beams are connected with together by welding to form the frame for accommodating the battery cell.

The inventors found that during the use of the battery pack, the battery cells will generate heat, which causes the battery cells to expand, then presses the side beams and the cross beams of the housing, reduces the connection strength of the welding area of the side beams and the cross beams, and what's more, leads to cracking in the welding area and affects the product yield. The locking and attaching method by a bolt can alternatively improve the connection strength between the side beam and the cross beam, but the assembly process is difficult and the cost is high. Therefore, under the condition that the housing of the battery is subjected to a large expansion force, how to improve the connection strength between the beams in the housing has become an urgent problem to be solved.

In view of this, an embodiment of the present application provides a technical solution, in which the housing of the battery includes a frame beam and a cross beam. The frame beam includes a first surface and an engaging groove with an opening on the first surface. The cross beam includes a main body and ends located at two ends of the main body in its length direction, the ends include a protruding structure and a connecting surface located on a peripheral side of the protruding structure, the cross beam is engaged with the frame beam through the protruding structure and the engaging groove, and the cross beam is fixedly connected with the frame beam through the connecting surface and the first surface.

In this technical solution, a plurality of engaging grooves are provided on the frame beam, and the cross beam is embedded in the engaging grooves, so the connection strength between the frame beam and the cross beam is improved, reducing the possibility of being damaged by the expansion force of the battery cell, which improves the strength of the housing of the battery. The protruding structure at the end of the cross beam is engaged with the engaging groove, so the force on the cross beam is allowed to be transmitted into the frame beam through the protruding structure, increasing the force receiving area between the frame beam and the cross beam, which further improves the strength of the housing of the battery.

The technical solutions described in the embodiments of the present application are applicable to a battery and a power consumption device using a battery.

The power consumption devices may be vehicles, mobile phones, portable devices, laptops, ships, spacecraft, electric toys, electric tools, etc. The vehicles may be fuel vehicles, gas vehicles or new energy vehicles, and the new energy vehicles may be pure electric vehicles, hybrid electric vehicles, extended-range vehicles, etc.; the spacecrafts include airplanes, rockets, space shuttles, spaceships, etc.; the electric toys include fixed or mobile electric toys, such as game machines, electric car toys, electric ship toys and electric airplane toys; the electric tools include metal cutting electric tools, electric grinding tools, electric assembling tools and electric tools for railways, such as electric drills, electric grinders, electric wrenches, electric screwdrivers, electric hammers, impact electric drills, concrete vibrators, electric planers. The embodiments of the application do not impose special restrictions on the above-mentioned power consumption devices.

For the sake of illustration, the following embodiments are illustrated with a vehicle as a power consumption device.

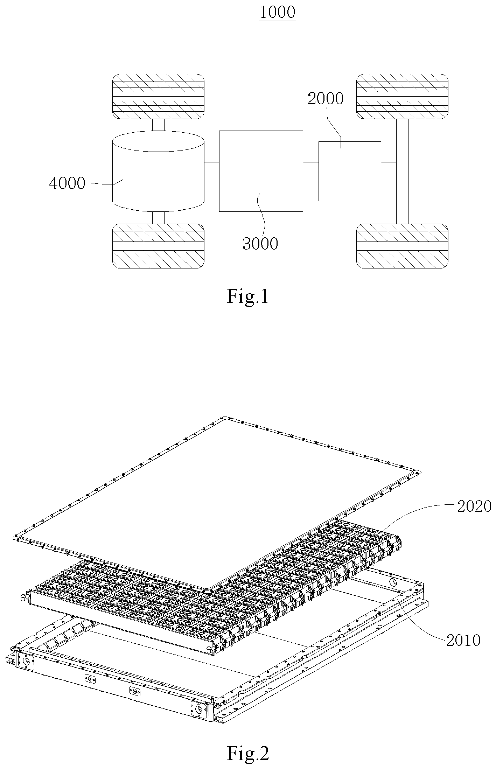

Fig. 1 is a schematic structural diagram of a vehicle provided by some embodiments of the present application.

As shown in Fig. 1, a battery 2000 is provided inside the vehicle 1000 and may be provided at the bottom 121a or a head or a tail of the vehicle 1000. The battery 2000 can be configured for power supply of the vehicle 1000, for example, the battery 2000 can serve as an operating power source of the vehicle 1000.

The vehicle 1000 may also include a controller 3000 and a motor 4000, the controller 3000 is configured for controlling the battery 2000 to supply power to the motor 4000, for example, for operating electricity requirements during start-up, navigation and running of the vehicle 1000.

In some embodiments of the present application, the battery 2000 may not only serve as the operating power source of the vehicle 1000, but also serve as a driving power source for the vehicle 1000, so as to replace or partially replace fuel or natural gas to provide driving power for the vehicle 1000.

Fig. 2 is a schematic exploded diagram of a battery provided in some embodiments of the present application.

As shown in Fig. 2, the battery 2000 includes a housing 2000 and a battery cell 2020 accommodated in the housing 2010.

One or more battery cells 2020 are provided in the battery 2010. If a plurality of battery cells 2020 are provided, the plurality of battery cells 2020 may be connected with one another in series, in parallel or in a parallel-series manner, the parallel-series manner indicating that the plurality of battery cells 2020 are connected in both series and parallel. The plurality of battery cells 2020 may be directly connected in series, in parallel or in a parallel-series manner, and then a whole formed by the plurality of battery cells 2020 is accommodated in the housing 2010; of course, the plurality of battery cells 2020 may be connected in series, in parallel or in a parallel-series manner to form a battery module first, and then a plurality of battery modules are connected in series, in parallel or in a parallel-series manner to form a whole to be accommodated in the housing 2010.

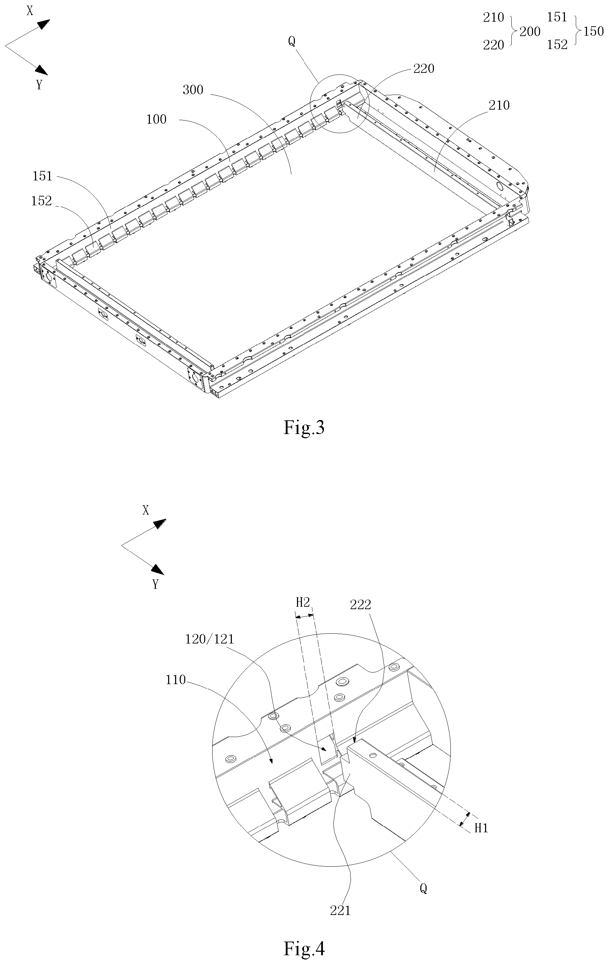

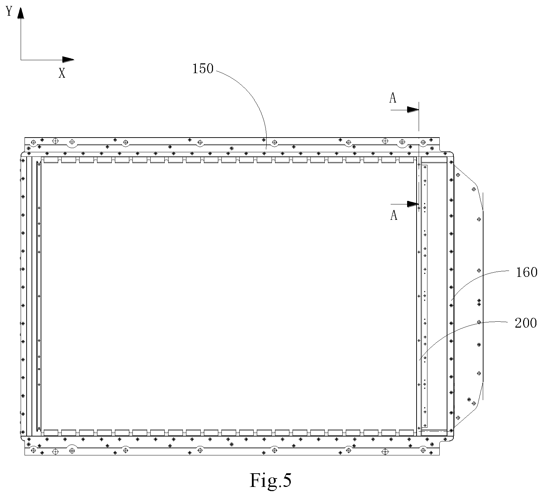

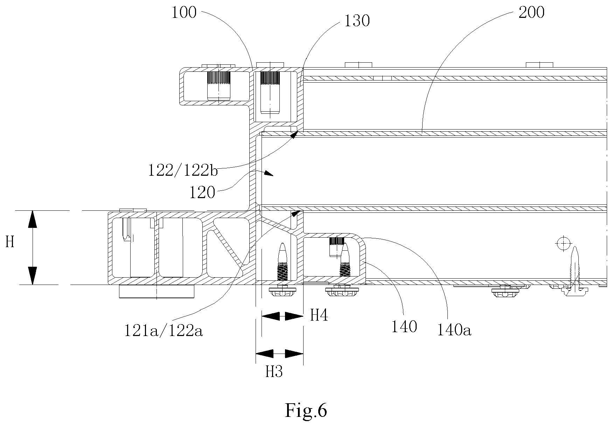

Fig. 3 is a schematic structural diagram of a housing of a battery provided in some embodiments of the present application. Fig. 4 is an enlarged structural diagram of a region Q shown in Fig. 3. Fig. 5 is another perspective schematic diagram of the housing 2010 of the battery shown in Fig. 3. Fig. 6 is a cross-sectional structural schematic diagram along a line A-A in Fig. 5.

As shown in Fig. 2 to Fig. 6, the housing 2010 of the battery of an embodiment of the present application includes a frame beam 100 and a cross beam 200, and the frame beam 100 includes a first surface 110 and an engaging groove 120 with an opening 121 located on the first surface 110. The cross beam 200 includes a main body 210 and end portions 220 located at two ends of the main body 210 in the length direction of the cross beam, the end portion 220 includes a protruding structure 221 and a connecting surface 222 located at the peripheral side of the protruding structure 221, the cross beam 200 is engaged with the frame beam 100 through the protruding structure 221 and the engaging groove 120, and the cross beam 200 is fixedly connected with the frame beam 100 through the connecting surface 222 and the first surface 110.

The frame beam 100 encloses to form a frame of the housing 2010 of the battery for accommodating the battery cell 2020. A side of the frame beam 100 toward the battery cell 2020 is a first surface 110. One or more engaging grooves 120 are provided in the frame beam 100, and the opening 121 is provided in the first surface 110. The opening 121 may be in a polygon shape such as a rectangle, a square, or a rhombus shape. In some examples of this embodiment, the engaging groove 120 may be formed by being recessed into the frame beam 100 in a direction perpendicular to the frame beam 100 and the first surface 110. In some other examples of this embodiment, the engaging groove 120 may be formed by being recessed from the frame beam 100 in a direction forming a certain angle with the frame beam 100 and the first surface 110.

The cross beam 200 may be engaged in the engaging groove 120 of the frame beam 100 through the end portion 220, so as to define the accommodating space for the battery cell 2020. The protruding structure 221 protrudes from the end portion 220 of the cross beam 200, and a protruding direction of the protruding structure 221 is consistent with a recessed direction of the engaging groove 120, so that the protruding structure 221 is inserted into the engaging groove 120. In some examples of this embodiment, a protruding shape of the protruding structure 221 is similar to a recessed shape of the engaging groove 120, so that after the protruding structure 221 is inserted into the engaging groove 120, there is a sufficient contact area between the protruding structure 221 and the engaging groove 120, which prevents the protruding structure 221 from moving in the engaging groove 120 and affecting the subsequent welding between the cross beam 200 and the frame beam 100. In some other examples of this embodiment, the protruding shape of the protruding structure 221 may be a cube, a cuboid, etc., which reduces the process difficulty of the cross beam 200.

It can be understood that after the protruding structure 221 is engaged with the engaging groove 120, the protruding structure 221 will generate a pre-tightening force, so as to facilitate the fixed connection between the cross beam 200 and the frame beam 100. The fixed connection between the cross beam 200 and the frame beam 100 can be realized by connecting such as welding or bonding between the connecting surface 222 on the cross beam 200 and the first surface 110 on the frame beam 100.

In this embodiment, the one or more engaging grooves 120 are provided in the frame beam 100 and the cross beam 200 is embedded in the engaging grooves 120, so as to improve the connection strength between the frame beam 100 and the cross beam 200, reducing the possibility of damage due to the expansion force of the body 2020, which thereby improves the strength of the housing 2010 of the battery. The protruding structure 221 at the end portion 220 of the cross beam 200 is engaged into the engaging groove 120, so that the force received by the cross beam 200 can be transmitted into the frame beam 100 through the protruding structure 221, increasing the force receiving area between the frame beam 100 and the cross beam 200, which further improves the strength of the housing 2010 of the battery.

In some embodiments, a minimum distance H between an edge of a bottom 121a of the opening 121 in a thickness direction of the housing 2010 and a bottom edge 110a of the first surface 110 satisfies a relationship of 10 mm≤H≤100 mm.

In the thickness direction of the housing 2010, the first surface 110 has a bottom edge 110a and a top edge opposite to each other, and the opening 121 for forming the engaging groove 120 has a bottom 121a and a top.

In this embodiment, if a minimum distance between the edge of the bottom 121a of the opening 121 and the bottom edge 110a of the first surface 110 is too small or too large, the closer the opening 121 is to the edge of the frame beam 100 and the lower the strength of the frame beam 100 itself is. The minimum distance between the edge of the bottom 121a of the opening 121 and the bottom edge 110a of the first surface 110 is limited to a relationship of 10 mm≤H≤100 mm, so as to ensure the strength of the frame beam 100 itself.

In some embodiments, the engaging groove 120 includes a plurality of side wall surfaces 122, and the protruding structure 221 is arranged in tight contact with a part of the plurality of side wall surfaces 122.

In this embodiment, the cross beam 200 is affected by its own gravity, so the surface of the protruding structure 221 will be in tight contact with a part of the side wall surfaces 122. Exemplarily, the side wall surfaces 122 of the engaging groove 120 can be classified into a bottom surface 122a and a top surface 122b opposite to each other in the thickness direction of the housing 2010, and a plurality of sides opposite to each other. The surface of the protruding structure 221 may be in tight contact with the bottom surface 122a of the engaging groove 120. In some examples of this embodiment, the surface of the protruding structure 221 may alternatively be in tight contact with one or more side surfaces of the engaging groove 120. Moreover, the protruding structure 221 is in tight contact with a part of the side wall surfaces 122, so as to realize the engagement between the protruding structure 221 and the engaging groove 120, which facilitates the fixed connection between the subsequent cross beam 200 and the frame beam 100.

In some embodiments, the engaging groove 120 includes a plurality of side wall surfaces 122, and a gap is provided between the protruding structure 221 and another part of the plurality of side wall surfaces 122.

In some examples of this embodiment, a gap is provided between the surface of the protruding structure 221 and the top surface 122b in the engaging groove 120. In some other examples of this embodiment, the surface of the protruding structure 221 is in tight contact with one or more side surfaces of the engaging groove 120.

In this embodiment, a gap is provided between a part of the side wall surfaces 122 of the engaging groove 120 and the protruding structure 221, so as to ensure that the protruding structure 221 can be embedded into the engaging groove 120 easily.

In some embodiments, a minimum thickness H1 of the protruding structure 221 in the thickness direction of the cross beam 200 satisfies a relationship of 5mm≤H1≤100mm.

In some examples of this embodiment, in order to ensure that the protruding structure 221 can better transmit the compressing force received by the cross beam 200 to the frame beam 100 through the protruding structure 221, the protruding structure 221 and the main body 210 are integrally formed.

In this embodiment, if a thickness of the protruding structure 221 is too small, the force receiving performance between the protruding structure 221 and the frame beam 100 will be reduced. If the thickness of the protruding structure 221 is too large, the connection strength between the protruding structure 221 and the cross beam 200 will be reduced. The thickness of the protruding structure 221 is limited to a relationship of 5 mm≤H1≤100 mm, so as to ensure the force receiving performance between the protruding structure 221 and the frame beam 100 and the connection strength between the protruding structure 221 and the cross beam 200.

In some embodiments, a minimum distance between two opposite side wall surfaces 122 of the engaging groove 120 in the extending direction X of the frame beam 100 is H2, and H1 and H2 satisfy a relationship of 0mm≤H2-H1≤1 mm.

In this embodiment, the minimum distance between the two side wall surfaces 122 of the engaging groove 120 opposite to each other in the extending direction X of the frame beam 100 is disposed so that the two side wall surfaces 122 and the two surfaces of the protruding structure 221 in the thickness direction X can be in tight contact with each other or arranged with a gap therebetween, which ensures that the protruding structure can be easily engaged with the engaging groove. If the reserved gap is too large, the welding strength between the cross beam 200 and the frame beam 100 will be reduced. A relationship between the minimum distance between the two side wall surfaces 122 of the engaging groove 120 opposite to each other in the extending direction X of the frame beam 100 and the two surfaces in the thickness direction X of the protruding structure 221 is limited to 0 mm≤H2-H1≤1 mm, so as to facilitate the assembly of the protruding structure 221 and to ensure the welding strength between the cross beam 200 and the frame beam 100.

In some embodiments, a depth H3 of the engaging groove 120 in a thickness direction Y of the frame beam 100 satisfies a relationship of 5 mm≤H3≤50mm.

In this embodiment, the deeper the depth of the engaging groove 120, the lower the strength of the frame beam 100 itself, and the shallower the depth of the groove 120, the worse the force effect which the protruding structure 221 can transmit to the groove 120. In this embodiment, the depth of the engaging groove 120 is limited to a relationship of 5 mm≤H3≤50 mm, and the depth of the engaging groove 120 is increased as much as possible while ensuring the strength of the frame beam 100 itself.

In some embodiments, a distance between an end surface of the protruding structure 221 in the protruding direction Y and the connecting surface 222 is H4, and H3 and H4 satisfy a relationship of 0 mm≤H4-H3≤10 mm.

In order to simplify the process of the protruding structure 221 in the cross beam 200, in some examples of this embodiment, the protruding shape of the protruding structure 221 is a cuboid. A distance between the end surface of the protruding structure 221 and the connecting surface 222 is the protruding length of the protruding structure 221. Likewise, in order to simplify the process of the engaging groove 120, the recessed shape of the engaging groove 120 may be a cuboid groove. A depth of the engaging groove 120 in the thickness direction Y of the frame beam 100 is also the recessed depth of the engaging groove 120.

In this embodiment, the smaller the difference between, the distance between the end surface of the protruding structure 221 in the protruding direction Y and the connecting surface 222, and, the depth of the engaging groove 120 in the thickness direction Y of the frame beam 100, the more difficult the process is. The larger the difference between, the distance between the end surface of the protruding structure 221 in the protruding direction Y and the connecting surface 222, and, the depth of the engaging groove 120 in the thickness direction Y of the frame beam 100, the worse the force receiving performance between the protruding structure 221 and the frame beam 100 is. The relationship between the protruding distance of the protruding structure 221 and the depth of the engaging groove 120 is limited to 0mm≤H4-H3≤10mm, so as to balance the process and the force receiving performance.

In some embodiments, the connecting surface 222 is connected with the first surface 110 by welding.

In this embodiment, the frame beam 100 and the cross beam 200 are fixedly connected by welding, so as to improve the connection strength between the frame beam 100 and the cross beam 200.

In some embodiments, the housing 2010 further includes a support plate 300 which is connected with the frame beam 100 and encloses the frame beam 100 to form an accommodating cavity. The accommodating cavity is configured to accommodate the battery cell. The battery cell can be fixedly connected with the support plate 300 by means of bonding, bolts, etc.

In some embodiments, the frame beam 100 includes a position restricting portion 130 which is provided on a side of the opening 121 away from the support plate 300 and/or on a side of the opening 121 close to the supporting plate 300, and the connecting surface 222 abuts against the position restricting portion 130.

The support plate 300 covers the frame formed by the frame beam 100 to support the battery cell 2020.

In this embodiment, the position restricting portion 130 limits the depth of the protruding structure 221 embedded in the engaging groove 120, so as to prevent the protruding structure 221 on a side of the cross beam 200 from being embedded in the engaging groove 120 deeply and the protruding structure 221 on the other side of the cross beam 200 from being embedded in the engaging groove 120 shallowly due to a problem such as a process error or a process defect.

In some embodiments, the frame beam 100 further includes a guide transition portion 140 which is provided on a side of the frame beam 100 close to the support plate 300. The guide transition portion 140 is provided to protrude from the first surface 110 toward the accommodating cavity and is provided with a guide surface 140a on its side facing away from the frame beam 100, and the cross beam 200 abuts against at least a part of the guide surface 140a.

The shape of the guide surface 140a of the guide transition portion 140 may be a smooth guide curved surface or a guide angle. The closer the guide surface 140a to a side on which the support plate 300 is located, the farther the guide surface 140a from the frame beam 100, and the farther the guide surface 140a from the side on which the support plate 300 is located, the closer the guide surface 140a to the frame beam 100. During the mounting of the cross beam 200 and the frame beam 100, the cross beam 200 may be embedded into the engaging groove 120 of the frame beam 100 under the guidance of the guide surface 140a.

In this embodiment, the guide transition portion 140 can simplify the connection between the cross beam 200 and the frame beam 100, which reduces the accuracy calibration time required for the connection between the cross beam 200 and the frame beam 100. Furthermore, the transition guide portion can also improve the strength of the frame beam 100 itself and compensate for the compression resistance performance of the frame beam 100 reduced due to the provision of the engaging groove 120.

As shown in Figs. 3 to 5, in some embodiments, the plurality of frame beams 100 include two first side beams 150 provided in a first direction Y and two second side beams 160 provided in a second direction X, the first direction Y intersecting the second direction X; each second side beam 160 is connected with the two first side beams 150, the first side beam 150 and the second side beam 150 form an accommodating space in which the cross beam is arranged. Two cross beams 200 are provided and are arranged to be spaced apart in the second direction X, and each cross beam is connected with the two first side beams 150 respectively.

The first side beam 150 and the second side beam 160 are fixedly connected with each other to form a frame of the housing 2010 of the battery, and their connection method includes welding, gluing and the like. The accommodating space enclosed by the first side beam 150 and the cross beam 200 is configured to receive the battery cell 2020. The expansion force of the battery cell 2020 occurred due to operation or corrupt will compress the cross beam 200, and the cross beam 200 transmits the expansion force to the first side beam 150 through the protruding structure 221 and the engaging groove 120, so that the welding area between the first side beam 150 and the cross beam is not affected by the expansion force, and it should be noted that the expansion force which the first side beam 150 can withstand is far greater than the expansion force of the welding area between the cross beam 200 and the first side beam 150, thereby improving the reliability and safety of the housing 2010 of the battery.

In some embodiments, the first side beam 150 includes a beam body 151 and a reinforcement portion 152 which protrudes from the first surface 110, and at least one reinforcement portion 152 is provided between two adjacent engaging grooves 120 on the beam body 151 in an extending direction of the first side beam 150.

A gap is provided between the battery cell 2020 in the housing 2010 and the first side beam 150 of the housing 2010, and the reinforcement portion 152 is provided in this gap.

In this embodiment, the reinforcement portion 152 is configured to improve the strength of the beam body 151, and the provision of the reinforcement portion 152 between two adjacent engaging grooves 120 can reduce the influence on the strength of the beam body 151 itself after the engaging grooves 120 are provided on the beam body 151.

In some embodiments, the present application also provides a battery including a battery cell 2020 and the plurality of battery housings 2010 of any one of the above embodiments. The housing 2010 is configured to accommodate the battery cell 2020.

In some embodiments, the present application also provides a power consumption device including the battery of any one of the above embodiments for providing electrical energy.

In some embodiments, referring to Figs. 3 to 6, the present application provides a housing 2010 of a battery. The housing 2010 of the battery includes a frame beam 100 and a cross beam 200. The frame beam 100 includes a first surface 110 and an engaging groove 120 with an opening 121 located on the first surface 110. The cross beam 200 includes a main body 210 and end portions 220 located at two ends of the main body 210 in the length direction of the cross beam, the end portion 220 includes a protruding structure 221 and a connecting surface 222 located a peripheral side of the protruding structure 221, the cross beam 200 is engaged with the frame beam 100 through the protruding structure 221 and the engaging groove 120, and the cross beam 200 is fixedly connected with the frame beam 100 through the connecting surface 222 and the first surface 110. The frame beam 100 further includes a guide transition portion 140 provided on a side of the frame beam 100 close to the support plate 300. The frame beams 100 enclose to form an accommodating space in which the cross beam 200 is provided, and the end of the cross beam 200 is respectively connected with two frame beams 100.

It should be noted that the embodiments in the application and features in the embodiments may be combined with one another if there is no conflict.

It should be finally noted that, the above embodiments are merely used for illustrating, rather than limiting, the technical solutions of the present application; although the present application has been described in detail with reference to the foregoing embodiments, it should be understood by those of ordinary skill in the art that, they can still modify the technical solutions described in the foregoing embodiments, or make equivalent substitutions to some of the technical features therein, but these modifications or substitutions do not make the essence of the corresponding technical solutions deviate from the gist and scope of the technical solutions of each embodiment of the application.

## Claims

1. A housing of a battery, comprising
a frame beam, comprising a first surface and an engaging groove with an opening on the first surface; and
a cross beam, comprising a main body and end portions located at two ends of the main body in a length direction of the cross beam, the end portion comprising a protruding structure and a connecting surface located on a peripheral side of the protruding structure, the cross beam being engaged with the frame beam through the protruding structure and the engaging groove, and the cross beam being fixedly connected with the frame beam through the first surface and the connecting surface.

2. The housing according to claim 1, wherein a minimum distance H between a bottom edge of the opening and a bottom edge of the first surface, in a thickness direction of the housing, satisfies a relationship of 10 mm≤H≤ 100 mm.

3. The housing according to claim 1, wherein the engaging groove comprises a plurality of side wall surfaces, and the protruding structure is provided in tight contact with a part of the plurality of side wall surfaces.

4. The housing according to claim 3, wherein a gap is provided between the protruding structure and another part of the plurality of side wall surfaces.

5. The housing according to any one of claims 1-4, wherein a minimum thickness H1 of the protruding structure in a thickness direction of the cross beam satisfies a relationship of 5 mm≤H1≤100 mm.

6. The housing according to claim 5, wherein a minimum distance between the two side wall surfaces of the engaging groove facing each other in an extension direction of the frame beam is H2, and H1 and H2 satisfy a relationship of 0 mm≤H2-H1≤1 mm.

7. The housing according to any one of claims 1-6, wherein a depth H3 of the engaging groove in a thickness direction of the frame beam satisfies a relationship of 5 mm≤H3≤50 mm.

8. The housing according to claim 7, wherein a distance between an end surface of the protruding structure in a protruding direction and the connecting surface is H4, and H3 and H4 satisfy a relationship of 0 mm≤H4-H3≤10 mm.

9. The housing according to any one of claims 1-8, wherein the connecting surface is connected with the first surface by welding.

10. The housing according to any one of claims 1-9, further comprising a support plate connected with the frame beam and enclosing with the frame beam to form an accommodating cavity.

11. The housing according to claim 10, wherein the frame beam comprises a position restricting portion provided on a side of the opening away from the support plate and/or on a side of the opening close to the support plate, and the connecting surface abuts against the position restricting portion.

12. The housing according to claim 10, wherein the frame beam further comprises a guide transition portion provided on a side of the frame beam close to the support plate and provided to protrude in a direction from the first surface toward the accommodating cavity, the guide transition portion comprises a guide surface on its side facing away from the frame beam, and the cross beam abuts against at least a portion of the guide surface.

13. The housing according to claim 1, wherein the frame beam comprises two first side beams and two second side beams, the two first side beams are arranged in a first direction, and the two second side beams are arranged in a second direction, and the first direction intersects with the second direction;
each second side beam is connected to the two first side beams, the first side beams and the second side beams form an accommodation space in which the cross beam is arranged; and
two cross beams are provided, the two cross beams are arranged to be spaced apart in the second direction, and each cross beam is connected to the two first side beams respectively.

14. The housing according to claim 13, wherein the first side beam comprises a beam main body and a reinforcement portion which protrudes from the first surface, and at least one reinforcement portion is provided between two adjacent engaging grooves on the beam main body in an extension direction of the first side beam.

15. A battery, comprising
a battery cell; and
the housing according to any one of claims 1-14 for accommodating the battery cell.

16. A power consumption device, comprising the battery according to claim 15 for providing electric energy.
